(19) Europäisches Patentamt

European Patent Office

Office européen des brevets

(11) **EP 1 634 692 A1**

(12) **EUROPEAN PATENT APPLICATION**
published in accordance with Art. 158(3) EPC

(43) Date of publication:
**15.03.2006 Bulletin 2006/11**

(51) Int Cl.:
**B29C 61/06** (1985.01)  **F16B 19/00** (1968.09)
**F16B 35/00** (1968.09)  **F16B 37/00** (1968.09)

(21) Application number: **03728037.7**

(22) Date of filing: **07.05.2003**

(86) International application number:
**PCT/JP2003/005723**

(87) International publication number:
**WO 2004/098864 (18.11.2004 Gazette 2004/47)**

(84) Designated Contracting States:
**AT BE BG CH CY CZ DE DK EE ES FI FR GB GR HU IE IT LI LU MC NL PT RO SE SI SK TR**

(71) Applicant: **Meira Corporation**
**Nagoya-shi,**
**Aichi 453-0015 (JP)**

(72) Inventors:
• **Hayashi, Shunichi,**
  **Mitsubishi Heavy Ind., Ltd.**
  **Nakamura-ku, Nagoya-shi, Aichi 453-0862 (JP)**
• **Ohashi, Makoto,**
  **Meira Corporation**
  **Nagoya-shi, Aichi 453-0015 (JP)**

• **Matsumoto, Takemi,**
  **Meira Corporation**
  **Nagoya-shi, Aichi 453-0015 (JP)**
• **Naoi, Manabu,**
  **Meira Corporation**
  **Nagoya-shi, Aichi 453-0015 (JP)**
• **Nagata, Satoshi,**
  **Churyo Engineering Co., Ltd.**
  **Nagoya-shi, Aichi 453-0862 (JP)**

(74) Representative: **Casalonga, Axel**
**Bureau D.A. Casalonga-Josse**
**Paul-Heyse-Strasse 33**
**80336 Munich (DE)**

(54) **SHAPE MEMORY POLYMER PLASTIC-FORMING METHOD, FASTENER, AND SHAPE MEMORY POLYMER STRUCTURE MANUFACTURING METHOD**

(57) In a fastener composed of a shape memory polymer, a portion displaying a fastening function is molded by secondary shaping. An original configuration of the fastener before the shape memory polymer is secondarily shaped is primarily shaped in such a way that the fastener does not have a fastening function. By heating the fastener above the glass transition temperature, the fastener loses a fastening force and can be easily decomposed. As the secondary shaping, cold plastic processing or a hot molding/cold fixing method is used. It is essential to use the shape memory polymer which has a high configuration recovery ratio and whose glass transition temperature can be adjusted in a region sufficiently higher than a room temperature. Thus a polyurethane shape memory polymer is selected.

Fig. 1

EP 1 634 692 A1

**Description**

TECHNICAL FIELD

The present invention relates to a method for plastically processing a polyurethane shape memory polymer, a fastener, and a method for manufacturing a polyurethane shape memory polymer structure.

BACKGROUND ART

Electronic apparatuses, electrical appliances such as domestic appliances, and mechanical products are composed of a lot of component parts and assembled with a lot of fastening component parts including screws, rivets, and the like. To effectively utilize resources by decomposing and recycling these appliances, the cost of decomposing them poses a big problem.

By using a fastener composed of a shape memory material (alloy, polymer, and the like), it is theoretically possible to change the configuration of the fastener above a certain temperature and eliminate a fastening force therefrom. As the fastener for a product manufactured on the assumption that it is decomposed and recycled, the fastener is excellent. Therefore there is a demand for realization of a fastener manufactured based on a hot decomposition concept.

As the fastener composed of the shape memory material, the application of an alloy and a polymer to a fastening pin for fastening component parts by using a configuration recovery characteristic by heating was published ("Development of a material for a shape memory polymer" compiled by Masahiro Irie, CMC, Page 25, 1989). Basic proposals regarding a fastener realizing a decomposing function reverse to the fastening function by utilizing a similar characteristic were disclosed (for example, Japanese Patent Application Laid-Open No. 7-4407).

Although basic proposals were made with regard to the fastener whose fastening force depends on temperature, such a fastener has not been put to practical use. This is because fasteners manufactured as experiments from materials such as the alloy or the polymer are low in their shape recovery characteristic or difficult to be processed (secondary shaping or secondary molding). Therefore discovery of a material having sufficient moldability and shape recovery characteristic is the first step toward realization of such a fastener, and evaluation of the cost thereof is required at the last step.

When the alloy and the polymer are compared with each other with regard to the selection of the material, the polymer has a much greater shape recovery characteristic value than the alloy. The shape recovery characteristic value of the alloy is normally less than 10%, whereas some polymers have not less than 100% in the shape recovery characteristic value thereof. Further the cost of the polymer is much lower than that of the alloy. A Ti-Ni alloy which is a typical shape memory alloy costs several hundreds of thousands of yen/kg, whereas the shape memory polymer is as inexpensive as ¥5,000/kg. As described above, because the shape memory polymer is superior in its shape recovery characteristic, it has a high degree of freedom in design. Further because the shape memory polymer costs low, it is much more advantageous than the shape memory alloy in replacing fasteners currently used. Accordingly, for the above-described reason, the present inventors have selected the shape memory polymer and investigated the application thereof to the fastener.

As described above, the shape memory polymer is an excellent material, but regarding a processing (secondary shaping) technique, the shape memory polymer has a big problem in using it practically.

As the method of molding the shape memory polymer, injection molding, extrusion molding, casting molding, and blow molding are used. By using these methods, it is possible to mold the shape memory polymer into a desired shape and store the shape (primary shaping or primary molding). To deform the shape memory polymer in this state, the shape memory polymer is heated above the glass transition temperature Tg to transit the shape memory polymer to a rubber region. Once the shape memory polymer is formed into the rubber state, it can be deformed easily. When the shape memory polymer in the deformed state is cooled to a temperature not more than the glass transition temperature Tg, the shape thereof can be fixed. It is normal to impart (secondary shaping or secondary molding) a new shape to the shape memory polymer that has undergone the primary shaping. A molded product that has undergone the secondary shaping is merely kept in a deformed state by a reversible phase (soft segment) temporarily forcibly fixed. Thus when the molded product that has undergone the secondary shaping is heated again above the glass transition temperature Tg, it is formed into the rubber state, and the stored shape (configuration of primary shaping) can be recovered.

A heating cycle of a temperature rise and a temperature drop is required in the secondary shaping method (hot molding and cold fixing method) of plastically deforming the shape memory polymer after heating it and fixing the configuration thereof by cooling it. Thus this method takes a long time, has a low productivity, and costs high. Therefore this method has not been used in a mass production. Such being the case, in addition to the hot molding and cold fixing method which is inferior in its productivity but is comparatively high in its molding accuracy, the present inventors have investigated a cold plastic processing method, having a high productivity, which has not been manufactured by way of trial as the secondary shaping method. But the shape memory polymer is viscoelastic. Thus the shape memory polymer has a smaller plastic deforming performance than metal. Further the shape memory polymer easily whitens and becomes brittle when it deforms. Thus it was anticipated that the cold plastic processing is a method difficult to carry out and in fact, the experimental result was as supposed. More specifically, press processing, forging, and rolling processing which are typical plastic processing methods were carried out. But a sufficient deformation amount could not be obtained in the condition conventionally used for metal.

To describe that the plastic processing is difficult to perform, a rolling processing method is described as an example.

In this molding method, by rolling a material between a plurality of dies (normally, two), shapes formed on the dies are transferred. This method is used to manufacture screws which are typical fasteners. In this rolling method, a rolling speed is one of indexes. In the case of a metal screw, the speed (corresponding to stroke speed of die) of the production made by a flat die rolling machine is normally in the range of 100 to 400/minute. The reason the rolling is performed at such a high speed is to secure a high productivity and in addition to smoothen the surface of the material to be rolled. In low-speed rolling, because inertia of a fly wheel cannot be utilized, a high load is applied to a motor. Thus the low-speed rolling is not preferable in terms of the construction. The rolling speed (peripheral speed of rolling of material) of the material at this time is 20 to 80cm/second in the case of a screw of class M6 specified in JIS.

There are few examples of reports regarding the rolling of the polymer. For example, in the case of polypropylene, a screw thread cannot be formed at a very low speed. Preferably a rolling speed not less than 20cm/second is necessary (Magazine entitled as "The present situation of plastic screw and tendency of research" written by Kenichi Saito, published by Japan screw research association, 22nd volume, 12th edition, Page 385, 1991). This suggests that the plastic deformation performance depends on the rolling speed and shows the characteristic of the polymer that as the rolling speed decreases, the material becomes decreasingly plastically deformable. Problems of the mechanism that at a rolling speed less than 20cm/second, a screw thread cannot be formed and that slip occurs at a rolling time and thus rolling molding cannot be performed are pointed out. Therefore when the polymer is rolled, it is necessary to consider a possibility that there is a lower limit in the rolling speed.

On the other hand, because at a high-speed rolling, because the temperature of the material is increased by deformative heat and frictional heat, an exothermic problem should be considered. Temperature rise caused by the generated heat affects the polymer to a higher extent than metal. Thus it is desirable that to suppress the generation of heat, the rolling speed is slow to some extent. The reason is that the polymer has a lower heat conductivity than the metal, heat is difficult to diffuse and in addition the characteristic of the material is changed greatly by the temperature rise. Above all, in the case of the shape memory polymer which is a thermoplastic resin, when the temperature of the material rises above the glass transition temperature Tg, it can be anticipated that a screw thread formed at the time of rolling recovers its original configuration immediately after the shape memory polymer separates from a rolling die and that a screw thread cannot be formed sufficiently.

Based on the above-described examination, the degree of the dependence of the outer diameter of the screw on the rolling speed was measured. The result was that a screw thread was hardly formed at rolling speeds (20 to 50cm/seccond) preferable for the polypropylene described in the above-described report. The polyurethane shape memory polymer was used in this experiment. The shape memory polymer whose glass transition temperature Tg was 55°C much higher than the room temperature was selected. They were cooled in consideration of heat generation.

As examples in this rolling shows, to plastically process the shape memory polymer, it is necessary to consider an effect different from that of metal. Needless to say, the processing condition for the shape memory polymer is different from that of the metal. The processing condition described in the report could not be applied directly to the shape memory polymer. As described above, in the conventional art, the shape memory polymer could not be efficiently secondarily shaped. Consequently the fastener, having a hot decomposing function, which was composed of the shape memory polymer could not be practically used.

As described above, regarding the fastener made of the shape memory material which recovers its original configuration above a certain temperature and is dependent on temperature in its fastening force, a material which can be put to practical use in terms of the shape recovery characteristic, cost, molding method has not been found. Further even though the shape memory polymer is selected in terms of its configuration recoverable degree and cost, a secondary shaping method having a high productivity has not been developed. Therefore the fastener having a sufficient fastening force at the room temperature and losing the fastening force above the glass transition temperature Tg has not been realized. Thus including a mass production, the realization of the fastener having the decomposing function is a big problem to be solved.

The present invention has been made to solve the above-described problems. Therefore it is an object of the present invention to realize a fastener which has a sufficient fastening force at the room temperature and loses a fastening force above the glass transition temperature Tg. More specifically, objects of the present invention are to select and develop a shape memory polymer suitable for the fastener, use a hot molding/cold fixing method as secondary shaping, and develop a cold plastic processing method. Further objects of the present invention are to provide a practically usable fastening part and a decomposing method by using the above-described material and processing method. Regarding the latter, the following problem is considered. For example, when the shape recovery characteristic is incomplete, the fastener cannot be decomposed by merely heating it. It is anticipated that even in such a case, a method of realizing the decomposition is necessary.

To solve the above-described problems and achieve the object of the present invention, in the present invention, a material capable of realizing the concept of a fastener which can be easily decomposed by being heated has been firstly selected and developed.

DISCLOSURE OF THE INVENTION

The present invention provides a method for plastically processing a polyurethane shape memory polymer, wherein a strain speed not more than 14 sec$^{-1}$ is used.

The present invention provides a fastener comprising a shape memory polymer composed of a polyurethane shape memory polymer partly or entirely, wherein said polyurethane shape memory polymer has at least one configuration displaying a fastening function selected from a group consisting of a convex portion, a concave portion, a convex/concave portion, a screw portion, and an inclined portion.

The present invention provides a method of decomposing a fastener, composed of a shape memory polymer, which has at least one configuration displaying a fastening function selected from a group consisting of a convex portion, a concave portion, a convex/concave portion, a screw portion, and an inclined portion, wherein said portions displaying said fastening function is softened by heating said portions above a glass transition temperature Tg to decompose said fastener in a state where a separation load of said fastener is reduced.

The present invention provides A method of manufacturing a shape memory polymer structure composed partly or entirely of a polyurethane shape memory polymer, comprising:

a step of preparing said shape memory polymer structure composed partly or entirely of said polyurethane shape memory polymer; and

a step of plastically processing a to-be-processed portion composed of said polyurethane shape memory polymer of said shape memory polymer structure at a strain speed not more than 14 sec$^{-1}$.

The present invention provides a fastener composed partly or entirely of a polyurethane shape memory polymer, wherein said fastener has a fastening function display portion provided at a portion composed of said polyurethane shape memory polymer and formed by plastic processing; and said fastening function display portion loses a fastening function by being heated above a glass transition temperature of said polyurethane shape memory polymer.

BRIEF DESCRIPTION OF THE DRAWINGS

Fig. 1 is a concept view showing a fastened state (state at room temperature) of a fastener according to one example of the present invention and a state after the fastener is heated.

Fig. 2 is a characteristic view showing dependence of an outer diameter of a screw on a rolling speed.

Fig. 3 is a characteristic view showing dependence of the outer diameter of the screw on a strain speed.

Fig. 4 is a characteristic view showing dependence of the outer diameter of the screw on a rolling speed.

Fig. 5 is an explanatory view for explaining an example of a manufacturing apparatus to be used in the manufacturing method of the present invention.

Fig. 6 is an explanatory view for explaining the configuration of a male screw of an example of a fastener and the configuration thereof after it recovers its original configuration by being heated in one example of the present invention.

Fig. 7 is an explanatory view showing the construction of an example of the present invention in which a fastener of the present invention is applied to a screw part and an operation to be performed after the fastener is heated.

Fig. 8 is an explanatory view showing the construction of another example of the present invention in which a fastener of the present invention is applied to a screw part and an operation to be performed after the fastener is heated.

Fig. 9 is an explanatory view showing an operation of an example of the present invention in which a fastener of the present invention is applied to a screw part.

Fig. 10 is an explanatory view showing an operation of an example of the present invention in which a fastener of the present invention is applied to a screw part.

Fig. 11 is an explanatory view showing an operation of an example of the present invention in which a fastener of the present invention is applied to a screw part.

Fig. 12 is a diagram showing the result of a test conducted to examine the characteristic of a fastener of another example of the present invention in a held state (room temperature) and a heated state.

Fig. 13 is an image view of a tensile load measuring test.

Fig. 14 is an explanatory view showing the construction of a fastener of another example of the present invention and an operation to be performed after the fastener is heated.

Fig. 15 is an explanatory view showing the construction of a fastener of another example of the present invention and an operation to be performed after the fastener is heated.

Fig. 16 is an explanatory view showing the construction of a fastener of another example of the present invention and an operation to be performed after the fastener is heated.

Fig. 17 is a diagram showing the result of a test conducted to examine the characteristic of a fastener of another example of the present invention in a held state (room temperature) and a heated state.

Fig. 18 is a perspective view of an example of the present invention in which a fastener of the present invention is applied to a male screw part.

Fig. 19 is a perspective view of an example of the present invention in which a fastener of the present invention is applied to a female screw part.

Fig. 20 is a perspective view of an example of the present invention in which a fastener of the present invention is applied to a fastening part.

BEST MODE FOR CARRYING OUT THE INVENTION

The preferred embodiments of the present invention will be described below as detailed examples with reference to drawings.

To solve the above-described problems and achieve the object of the present invention, in the present invention, a material capable of realizing the concept of a fastener which can be easily decomposed by being heated has been firstly selected and developed.

The shape memory polymer selected by the present inventors is a polyurethane shape memory polymer (developed by Mitsubishi Jukogyo Inc. under the commercial name of "DiARY"). The polyurethane shape memory polymer has a shape recovery characteristic as high as 400%. The material cost is as low as ¥3,000/kg. As will be described later, because the range of the shape recovery temperature (glass transition temperature Tg) is wider than that of other shape memory polymers, the degree of freedom in setting a decomposition temperature is high. Thus by using fasteners having different glass transition temperatures Tg, a selective decomposition can be accomplished by increasing the decomposition temperature stepwise. Because the range of the decomposition temperature extends to a high-temperature range, it is possible to take a big difference between a normal use temperature of a product and the decomposition temperature thereof. Thus it is possible to reduce the danger of an erroneous decomposition.

Main shape memory polymers and the shape recovery temperature (glass transition temperature Tg) thereof are as described below (the contents shown below are quoted from "New application and development of shape memory polymer" edited by Toray Research Center).

Polyurethane shape memory polymer (commercial name: DiARY): -30 to 120°C, styrene butadiene shape memory polymer: -60 to 90°C, trans-polyisoprene shape memory polymer: 67°C, polynorbornane: 34°C.

Regarding the second problem, namely, regarding a method of plastically processing these materials, the present inventors have made experiments and trial manufactures. As a result, they have found a condition for each material in the plastically processing method. As the secondary shaping method, rolling has been used mainly, and by using a circular rod material having a diameter of Φ5.2mm, they have investigated the moldability thereof into a screw of class M6 in detail. As a result, they have found that the plastic deformation amount of each material depends greatly on a rolling speed (strain speed) and a processing temperature, and have drawn conditions necessary for processing each of the materials. The means for solving the problems and the operation thereof are described below.

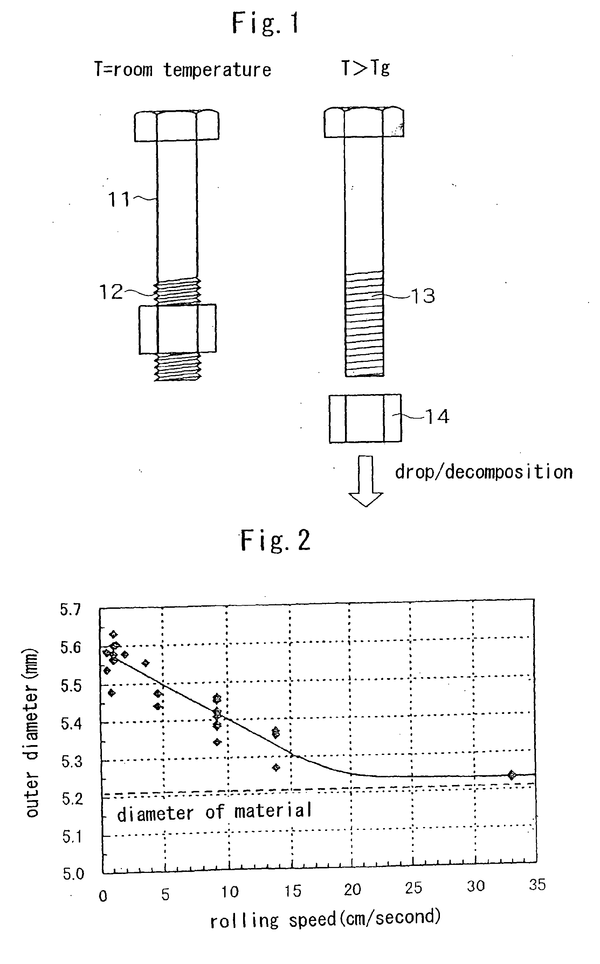

Fig. 2 is a graph for clarifying that setting of the outer diameter of the screw depends on a rolling speed. As described in the examples, to form a screw thread, the rolling speed should be not more than 20 cm/second. A particularly preferable rolling speed is not more than 5 cm/second in view of moldability.

Let it be considered that the size of the screw is altered from the class M6. Supposing that the outer diameter of the shaft of the material before it is processed is d0, as described in the examples, the condition of the above-described rolling speed can be rewritten as not more than $20 \times (d0/5.2)$ cm/second. A particularly preferable condition of the rolling speed is $5 \times (d0/5.2)$ cm/second.

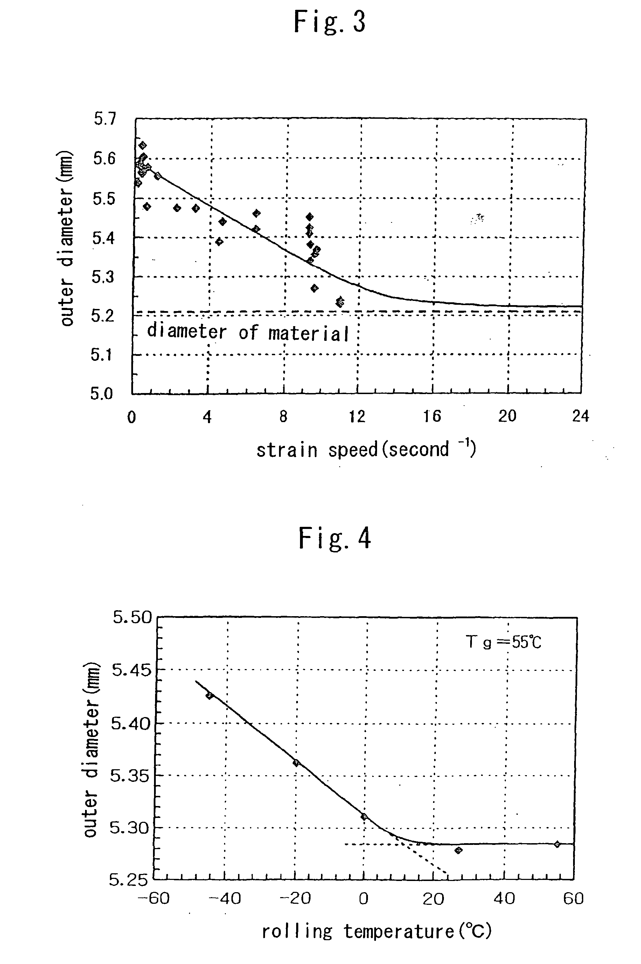

Fig. 3 is a graph obtained by converting the rolling speed shown in Fig. 2 to the strain speed by applying an uniaxial approximation to a stress-strain characteristic in the rolling. As described in the examples, it is necessary to plastically process the material at a strain speed not more than 14 $sec^{-1}$. A particularly preferable strain speed is not more than 4 $sec^{-1}$ in view of moldability.

The present invention provides a method for plastically processing a polyurethane shape memory polymer, wherein a strain speed not more than 14 $sec^{-1}$ is used. In the method of plastically process the shape memory polymer, it is possible to accomplish the plastic processing by setting the condition of the strain speed.

In the plastic processing including the rolling processing, when the diameter of the material before it is processed is d0, it is preferable to use a peripheral speed not more than 3.8×d0cm/second in the rotation of the shaft. When this condition is satisfied, the rolling processing can be accomplished easily and securely. This condition establishes not only for male screw parts but also for female screw parts such as a nut.

In the plastic processing of the polyurethane shape memory polymer, when the glass transition temperature Tg thereof is Tg, it is preferable to cool it to not more than Tg-45°C.

As described above, as the specific means for realizing the fastener which can be easily decomposed by heating it, the present inventors have selected the polyurethane shape memory polymer and further, developed the plastic processing method for molding it into an arbitrary configuration. Further, they have confirmed that a sufficient secondary shaping can be accomplished by a hot forming/cold fixing method. It is important that in practical use, a molded product formed in combination of the material of the present invention and the processing method of the present invention shows a sufficient shape recovery characteristic and the above-described material can be easily decomposed by heating it. This has been confirmed by trial manufacture and will be described in detail in the examples.

Fig. 1 shows a typical example of a fastener which can be realized in combination of the material of the present invention and the processing method of the present invention and which has a decomposing function by being heated. Fig. 1 shows the fastener composed of a screw composed of the polyurethane shape memory polymer and a metal nut. The left-hand drawing in Fig. 1 shows a fit-on state at a room temperature. The male screw, formed by the secondary shaping, which has a fastening function and the female screw which is the metal nut fit on each other. When the fastener is heated at not less than Tg, the male screw disappears almost completely, and the nut drops from the male screw. Thereby decomposition is completed. This state is shown in the right-hand drawing of Fig. 1. In the present invention, the method for forming the fastener having such a decomposing function by being heated and various constructions thereof will be disclosed below.

Initially the method of the first example of the present invention for processing the shape memory polymer and a manufacturing apparatus will be described below.

Regarding the polyurethane shape memory polymer selected by the present inventors, the data of a cold plastic processing method is unavailable. Thus the present inventors have made experiments and trial manufactures and found conditions thereof. In carrying out the secondary shaping by the cold plastic processing method, the present inventors have tackled rolling mainly. The material used in the rolling is a circular rod whose shaft portion has a diameter of about Φ5.2mm or the material having a head because it is molded into a screw. The present inventors have investigated the moldability thereof into the screw of the class M6 in detail. As a result, they have found that a residual strain amount (plastic deformation amount and permanent deformation amount) depends greatly on a rolling speed (or strain speed) and a processing temperature and derived conditions necessary for processing each material.

Fig. 2 is a graph that clarifies setting of the outer diameter of the screw depends on the rolling speed. The data was obtained in the use of a flat die (plate die) rolling machine and a round die rolling machine. The rolling was conducted in a standard condition except that the rolling speed was varied. When the rolling speed (peripheral speed of material in rolling) was not less than 20cm/ second, a screw thread was hardly formed. Thus to form the screw thread to some extent, it has become apparent that the rolling speed should less than 20cm/second. A particularly preferable rolling speed is not more than 5cm/second at which about 70% of a maximum plastic deformation amount can be secured and a sufficient fastening force can be obtained. This reflects a characteristic of the material that the plastically deforming performance thereof changes in dependence of the strain speed. It has become apparent that the plastically deforming performance of the material of the present invention can be improved by decreasing the strain speed and that the moldability thereof can be improved.

Considering a case in which the size of the screw is altered from the class M6, a metric screw specified the configuration of the screw thereof and thus the configuration of a die in JIS show an almost similar relationship (ratio of outer diameter of screw to diameter of material is about 1.1) respectively irrespective of the size of the screw. Thus the strain speed is almost determined by a rotational speed. Therefore supposing that the diameter of the shaft (blank diameter) of the material before it is processed is d0 in consideration of the size of the screw, the condition of the above-described rolling speed can be rewritten as not more than 20×(d0/5.2)cm/second. Therefore for effective processing, it is necessary to carry out processing at a speed including these conditions. These conditions include a case where the rolling speed is held at zero.

Fig. 3 is a graph obtained by converting the rolling speed shown in Fig. 2 to the strain speed. Regarding the spring back of the material compressed by a die as being sufficiently small and using an approximation of a uniaxial deformation, the strain speed can be expressed by an equation (7) shown below by using the rolling speed and a compression speed of a die surface (mountain portion) with respect to the center of the shaft of the material.

$$\varepsilon = \pi\omega\left(-1 + \sqrt{1 + 2\pi\frac{\gamma\omega}{v}}\right)^{-1}$$

[where $\varepsilon$ shows strain speed; $\gamma\omega$ ($\gamma$ shows radius of material, and $\omega$ shows speed of rotation of shaft) is rolling speed; $v$ shows compression speed of die surface (mounting portion) with respect to center of shaft of material.

The graph indicates that to form the screw thread, it is necessary to perform plastic processing at the strain speed not more than 14 sec[-1]. For a reason similar to the reason described in the case of the rolling speed, a particularly preferable condition of the strain speed is not more than 4 sec[-1]. Therefore for effective processing, it is necessary to perform processing at a speed including these conditions. These conditions include a case where the strain speed is kept at zero.

Herein, the compression speed $v$ was computed by using the angle of a lead portion in the case of the flat die and an approach speed in the case of a round die. By converting the rolling speed to the strain speed and using the obtained strain speed as the index, it is easy to apply the condition thereof to rolling processing not satisfying the standard condition and in addition plastically processing methods other than the rolling processing. Thus the use of the strain speed is very useful. Checking the dependence of a residual strain amount (plastic deformation amount) on the strain speed in other rolling processing methods such as forging and press molding, a tendency similar to that in the rolling was obtained. Therefore the above-described condition is generally applicable to methods for plastically processing the material of the present invention.

Fig. 4 is a graph showing the effect of cooling which appears on the outer diameter of a screw (serving as index of moldability of screw thread). The glass transition temperature Tg of the shape memory polymer used in experiments is 55°C. This graph indicates that to form a screw thread, it is effective to forcibly cool the shape memory polymer to a temperature not more than 10°C lower than the room temperature. This is considered as the result obtained by decreasing a spring back amount by utilizing the dependence of the spring back amount on temperature generated immediately after a plastic deformation occurs in addition to the effect obtained by forcibly removing heat generated by the rolling. In the shape memory polymer, owing to the movement of the glass transition temperature Tg, the dependence of the stress-strain characteristic on temperature moves almost parallel. Thus it is necessary to cool materials having different glass transition temperatures Tg to temperatures not more than Tg-(55-10) = Tg-45°C. A particularly preferable condition is not more than Tg-80°C at which 70% of a maximum deformation amount can be secured. Needless to say, this condition is applicable to other plastically processing methods.

Therefore it has become apparent that to plastically process the polyurethane shape memory polymer of the present invention, it is very effective to reduce the rolling speed (strain speed) and cool the material sufficiently.

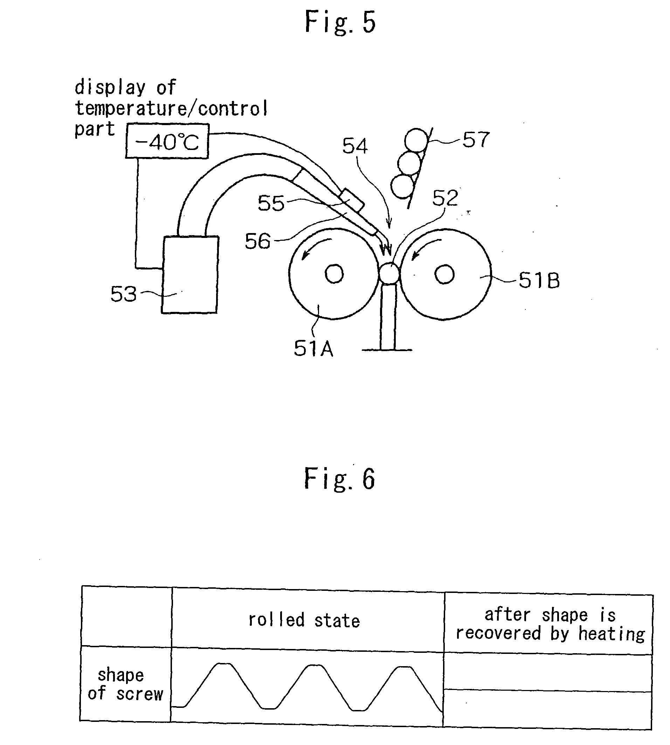

Fig. 5 is an explanatory view of a manufacturing apparatus for carrying out this processing method.

In Fig. 5, as the processing method, the rolling processing method using a round die rolling machine is shown. But as the rolling apparatus, it is possible to use a flat die (plate die) rolling machine, a planetary rolling machine or a female screw rolling machine (tapper). A round die rolling method is a processing method of transferring configurations formed on rotating round dies 51A and 51B to a material (circular rod) 52 composed of the shape memory polymer by sandwiching the material 52 between the round dies 51A and 51B and pressing the surface of the round dies 51A and 51B against the material 52. At the last stage, the material, including the head, which is to be processed into the fastener is formed by means of cast molding or injection molding.

As shown in Figs. 2 and 3, to realize the strain speed not more than 14 sec[-1] and the rolling speed not more than 3.8×d0cm/second (d0 is diameter of shaft of material), a driving motor of a low-speed type is used or a gear mechanism is provided to reduce the speed. In consideration of compatibility with a high-speed specification, the gear mechanism is used herein. The rotational speed of the dies is numerically controlled. The rolling speed (rolling speed of material) not more than 0.96×d0 cm/second is desirable in consideration of the moldability. This rolling speed is much lower than the rolling speed of a metal material. But the material of the present invention is a soft polymer. Thus a large torque is not required.

A cooling apparatus 53 of a cooling gas spray type has the ability to clear the cooling temperature condition (not more than Tg-45°C) shown in Fig. 4 and is capable of spraying a cooling gas 54 of minus several tens of degrees generated by thermal insulation cooling. A temperature sensor 55 is mounted on a spray nozzle 56 and capable of displaying an approximate temperature of the material. A gas was used as the cooling material herein. But a liquid may be dripped. The material and the dies may be cooled separately by cooling the material in the vicinity of a supply opening 57 of a transport system by using a similar method and cooling the dies with a cooling device such as a Peltier element. Further in cooling the material to a temperature not more than the room temperature, a dry air is flowed on the periphery of the material and the dies to prevent dew condensation from occurring on the rolling machine.

The mechanism for realizing the processing method of the present invention by using the rolling machine is shown. But a forging header or a press molding machine may be used to realize the processing method of the present invention.

The first example of the present invention and the example of the manufacturing method have been described.

The present invention provides a method of manufacturing a shape memory polymer structure composed partly or entirely of a polyurethane shape memory polymer, comprising the steps of preparing the shape memory polymer structure composed partly or entirely of the polyurethane shape memory polymer; and plastically processing a to-be-processed portion composed of the polyurethane shape memory polymer of the shape memory polymer structure at a strain speed not more than 14 sec-1.

In this manufacturing method, initially, the shape memory polymer structure composed partly or entirely of the polyurethane shape memory polymer is prepared. In this step, in composing the structure entirely of the polyurethane shape memory polymer, a structure obtained by processing the polyurethane shape memory polymer by using a known method such as an injection molding method, an extrusion molding method, a matrix molding method or a shaving molding method is prepared. In composing the structure partly of the polyurethane shape memory polymer, it is obtained by combining a body portion thereof formed from a material such as synthetic resin, metal, ceramics or wood other than the polyurethane shape memory polymer with a member, made of a polymer, which is obtained by using a known method such as the injection molding method, the extrusion molding method, the matrix molding method or the shaving molding method. To combine the body portion and the member made of the molded polymer with each other, known methods such as adhesion, screwing, fit-on, and two-color molding can be used.

The step of plastically processing the to-be-processed portion composed of the polyurethane shape memory polymer of the shape memory polymer structure prepared in the above-described manner is carried out at a strain speed not more than 14 sec-1. The plastically processing steps are as described above. Similarly to the above-described processing, the plastically processing step includes a rolling processing step. In the rolling processing step, supposing that the diameter of the structure before it is processed is d0, it is preferable that the peripheral speed of the rotation of the shaft is not more than $3.8 \times$d0cm/second. It is also preferable to carry out the plastic processing step in a state in which the shape memory polymer (more specifically, plastically processed portion of shape memory polymer structure) is cooled below 45°C from the glass transition temperature Tg. An example of the shape memory polymer structure is a fastener, having a fastening function display portion, formed in the plastically processing step.

A fastener, according to the second example of the present invention, which is composed of the shape memory polymer is described below.

The present invention provides a fastener composed of a shape memory polymer. The fastener is composed partly or entirely of a polyurethane shape memory polymer, wherein the polyurethane shape memory polymer has not less than one configuration selected from among a convex portion, a concave portion, a convex/concave portion, a screw portion, and an inclined portion displaying a fastening function respectively. This fastener is composed of the above-described polyurethane shape memory polymer in its fastening function display portion. According to the present invention using the polyurethane shape memory polymer, a fastened state can be easily released by heating it above the glass transition temperature Tg.

It is preferable to form the fastening function display portion of the fastener by secondary shaping the shape memory polymer by using the above-described plastically processing method or the above-described hot molding/cold fixing method. By doing in this manner and heating the fastening function display portion of the fastener above the glass transition temperature Tg, the fastening function display portion recovers a configuration before the fastening function is formed and loses the fastening function. Thus the fastener can be decomposed.

Fig. 6 shows the configuration of a male screw formed in accordance with the first example. The glass transition temperature Tg of the polyurethane shape memory polymer (commercial name: "DiARY") used in the second example is 55°C. In the rolling condition (rolling speed: 33 cm/sec, rolling temperature: room temperature) similar to that of a screw made of iron, the outer diameter of the shaft of the material after processing was carried out was Φ5.26mm with respect to Φ5.24mm which was the outer diameter of the shaft. Thus a screw thread was hardly formed. On the other hand, when the polyurethane shape memory polymer was forcibly cooled to -45°C at a reduced rolling speed of 1cm/second, the male screw having the configuration shown in Fig. 6 was obtained. This is the first time in providing the shape memory polymer with a configuration having the fastening function by using the secondary shaping. Checking the shape recovery characteristic by holding the polyurethane shape memory polymer at 70°C for one minute, it recovered its original configuration almost completely as shown in the drawing. The numerical data was that the outer diameter of the polyurethane shape memory polymer before it was rolled was 5.25mm, the outer diameter thereof after it was rolled was 5.67mm, and the outer diameter thereof when it recovered its original configuration by heating it was 5.25mm.

Not only the cold plastic processing, but also the hot molding/cold fixing method was investigated. The polyurethane shape memory polymer was heated at 70°C and cooled at 20°C by using water having a large specific heat. As a result, a snap fit-shaped convex portion (projection) could be formed. By heating the polyurethane shape memory polymer to 70°C again, it recovered its original configuration almost completely. The heat cycle required in carrying out the secondary shaping was about 30 seconds.

As described above, by using the material of the present invention and using the cold plastic processing method of the present invention and the hot molding/cold fixing method, it is possible to manufacture the fastener capable of realizing the hot decomposition concept.

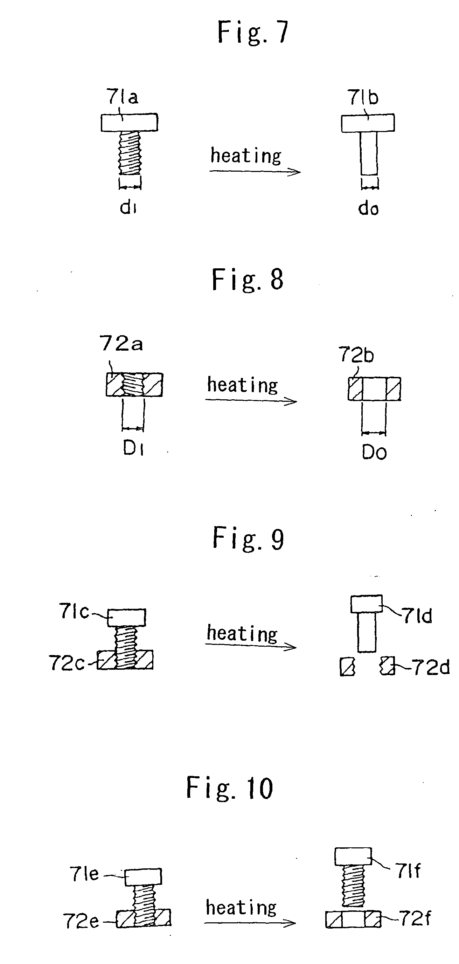

The basic construction of the fastener is shown in Figs. 7 through 11 by way of screw parts.

Fig. 7 shows that by heating a male part (screw) 71a composed of the shape memory polymer above the glass transition temperature Tg, the male part 71a changes into a member 71b on which a male screw portion has disappeared. Herein for the sake of simplicity, the case in which the male screw portion disappears is shown. But the outer diameter of the male screw portion may decrease. When a screw is formed by rolling, the length of the axial portion of the obtained screw becomes larger in its axial direction than that before it is rolled. Thus when the screw is heated to recover its original configuration by heating it, it shrinks in its axial direction.

Fig. 8 shows that by heating a female part (nut) 72a composed of the shape memory polymer above the glass transition temperature Tg, the female part 72a changes into a member 72b on which a female screw portion has disappeared. Herein for the sake of simplicity, the case in which the female screw portion disappears is shown. But the inner diameter of the female screw portion may increase.

Figs. 9, 10, and 11 show decomposed states of fasteners composed of the above-described screw parts.

Fig. 9 shows that in a fastener composed of a female part and a male part which fits thereon, an outer diameter d0 (not shown, see Fig. 7) of a male screw portion of a male screw part 71c (member after male screw part 71c is heated is 71d) made of the above-described shape memory polymer before a secondary shaping is carried out is made smaller than an inner diameter D1 (not shown, see Fig. 8) of a female screw portion of a mating female screw part 72c (member after female screw part 72c is heated is 72d: unchanged substantially) which fits on the male screw part 71c.

Supposing that the outer diameter of the secondarily shaped male screw portion is d1, an equation (1) indicates a decomposing condition, and an equation (2) indicates a fastening condition.

$$d0 < D1 \;\cdots\, (1)$$

$$d1 > D1 \;\cdots\, (2)$$

Therefore by heating the fastener above the glass transition temperature Tg, it is possible to make the outer diameter of the male screw portion smaller than the inner diameter of the female screw portion and make the separation load zero. This is set to a condition A. Actually, the shape recovery ratio does not attain 100%. Thus supposing that the outer diameter of the shape-recovered male screw portion is d0' (>d0), the equation (1) showing a little strict condition is expressed as follows:

$$d0' < D1 \;\cdots\, (8)$$

The case in which the male screw portion disappears is shown herein for the sake of simplicity. But the outer diameter of the male screw portion may decrease or a head portion may decrease or disappear.

Fig. 10 shows that in a fastener composed of a male part and a female part which fits thereon, an inner diameter D0 (not shown, see Fig. 8) of a female screw portion of a female screw part 72e (member after female screw part 72e is heated is 72f) made of the above-described shape memory polymer before a secondary shaping is carried out is made smaller than an outer diameter d1 (not shown, see Fig. 7) of a male screw portion of a mating male screw part 71e (member after male screw part 71e is heated is 71f: unchanged substantially) which fits on the female screw part 72e.

Supposing that the inner diameter of the secondarily shaped female screw portion is D1, an equation (3) indicates a decomposing condition, and an equation (4) indicates a fastening condition.

$$d0 < D1 \;\cdots\, (3)$$

$$d1 > D1 \;\cdots\, (4)$$

Therefore by heating the fastener above the glass transition temperature Tg, it is possible to make the inner diameter of the female screw portion larger than the outer diameter of the male screw portion and make the separation load zero. This is set to a condition B. Actually, the shape recovery ratio does not attain 100%. Thus supposing that the inner diameter of the shape-recovered female screw portion is DO' (<d0), the equation (3) showing a little strict condition is expressed as follows:

$$d1 < D0' \quad \cdots (9)$$

The case in which the female screw portion disappears is shown herein for the sake of simplicity. But the inner diameter of the female screw portion may increase.

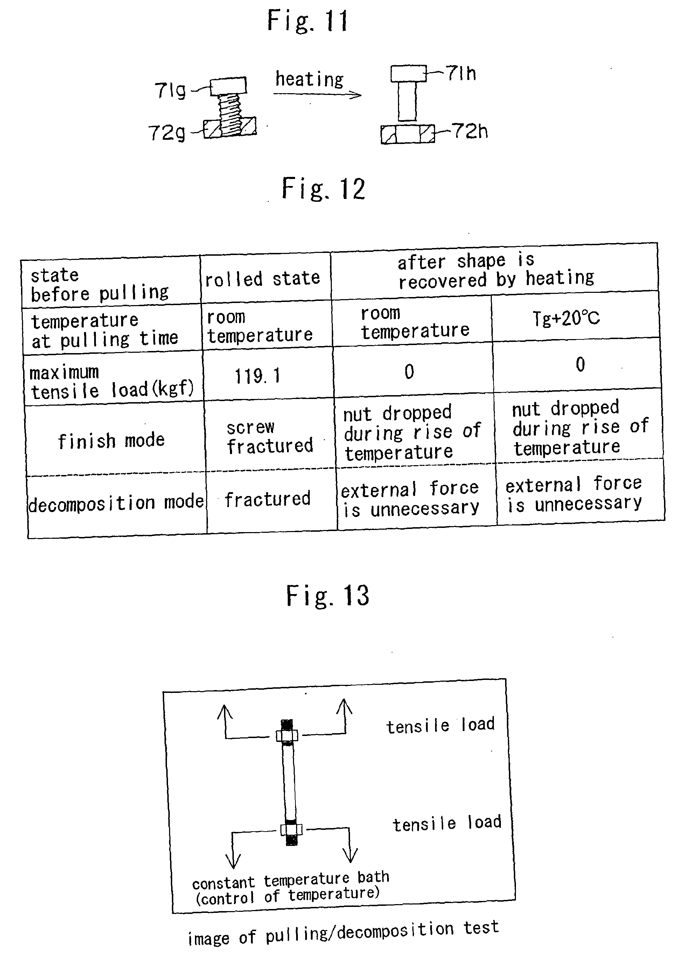

Fig. 11 shows that in a fastener composed of a male part and a female part which fits thereon, when an male screw part 71g (member after male screw part 71g is heated is 71h) and an female screw part 72g (member after female screw part 72g is heated is 72h) are formed by secondarily shaping the shape memory polymer, an inner diameter of a female screw portion before the secondary shaping is carried out is made larger than an outer diameter of a male screw portion which fits on the female screw portion before the secondary shaping is carried out.

Using the symbols used heretofore, the equation (5) indicates a decomposition condition, and the equation (6) indicates a fastening condition.

$$d0 < D0 \quad \cdots (5)$$

$$d1 > D1 \quad \cdots (6)$$

Therefore by heating the fastener above the glass transition temperature Tg, it is possible to make the inner diameter of the female screw portion larger than the outer diameter of the male screw portion and make the separation load zero. This is set to a condition C. At this time, the condition shown by the equations (5) and (6) is less strict than the above-described conditions A and B. Actually, the shape recovery ratio does not attain 100%. Thus using the inner and outer diameters of the shape-recovered female and male screw portion,

$$d0' < D0' \quad \cdots (10)$$

The equation (10) shows a little stricter condition than the equation (5). The case in which the male and female screw portions disappear is shown herein for the sake of simplicity. But the outer diameter of the male screw portion may decrease, the head portion may decrease or disappear or the inner diameter of the female thread portion may increase.

The method of manufacturing the male screw portion and the female screw portion is carried out by plastic processing.

For example, in the rolling, similarly to ordinary metal products, the male screw should be rolled by using a rolling die, and the female screw should be rolled by using a rolling tap of a plastically processing type. In the case where the outer diameter of the male screw portion decreases and in the case where the inner diameter of the female screw portion increases, the male and female screw portions may be formed by cutting processing. In the case where the inner diameter of the female screw portion increases, the female screw portion may be formed by a tapping screw.

In addition to the above-described methods, a molding method may be carried out by using the hot molding/ cold fixing method.

Figs. 12 and 13 show the data of a fastener which realizes the hot decomposition concept obtained by making the outer diameter of the male screw before rolling is carried out smaller than the inner diameter of a nut part by 0.1mm in accordance with the equations (1) and (6). The formed fastener is a stud-type screw having the male screw portion at both sides thereof. A metal nut was used as the mating member which fits on the male screw portion. Fig. 13 shows an image of the state of a tensile test conducted inside a constant-temperature bath. Fig. 12 shows the result of the test. As shown in Fig. 13, when the rolled screw was pulled at the room temperature, similarly to an ordinary metal screw, it was fractured not at its axial portion but at its screw portion as in the case of the usual metal screw. This indicates that the strength of the screw thread is high. A sufficient maximum tensile load of 119.1 kgf was shown at that time. This value is 58 MPa when it is expressed in terms of a stress by using an effective sectional area. This value is larger than a value (47 to 51 MPa) shown by hard polyvinyl chloride (PVC) and equal to a value (54 to 60 MPa) shown by polycarbonate (PC). That is, it could be confirmed that a polymer screw (plastic screw) had a sufficient strength. After the configuration was recovered at Tg+20°C, a decomposition mode at the room temperature and at Tg+20°C was checked. The male screw disappeared during heating, and gravity caused the metal nut to drop from the male screw and thus the fastener was decomposed.

As described above, by using the polyurethane shape memory polymer, using the developed processing method, and setting an appropriate condition among the outer diameter of the male screw, the shape-recovered outer configuration thereof, and the inner diameter of the female screw, it is possible to realize the fastener, having a decomposing function by being heated, which is shown in Fig. 1.

In this example, a simple combination of the male screw and the nut is shown. But a fastener having the decomposing function by being heated can be also obtained by combining a male screw part and a female screw part having other functions with each other.

A fastener, of the third example of the present invention, composed of the shape memory polymer will be described below.

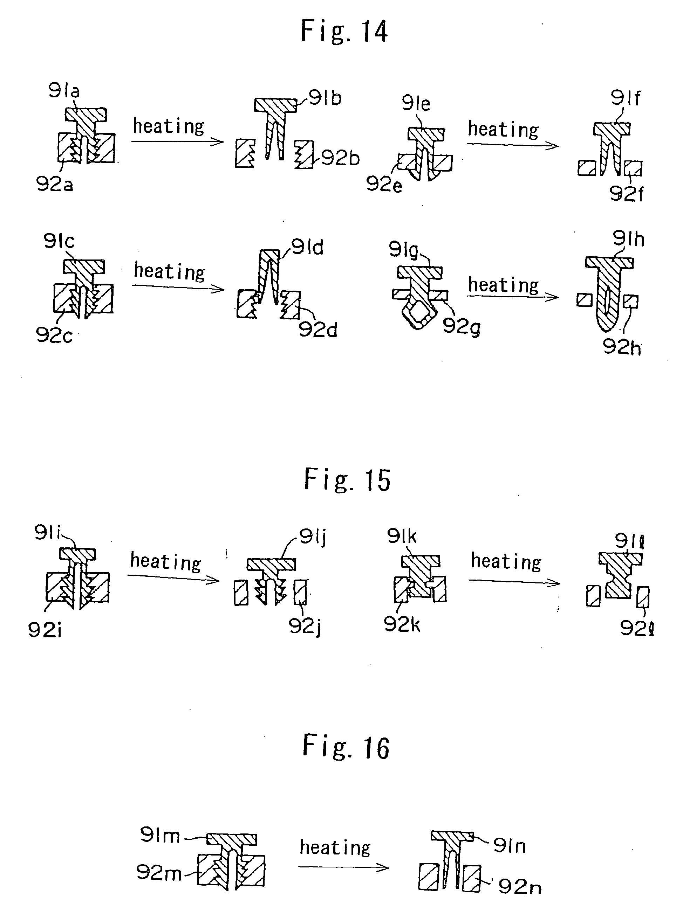

The second example relates to the screw parts. Snap-fit fasteners or the like other than the screw parts of the second example are described below as the third example with reference to Fig. 14.

Fig. 14 shows constructions corresponding to the above-described condition A. Fig. 14 shows four kinds of constructions of a male part (male fastener) to which the fastener of the present invention is applied and the operation to be performed after the fastener is heated. By heating (not less than glass transition temperature Tg) the male fasteners of all examples, they recover configurations before fastening function display portions are formed. By heating fastening members (male fasteners) 91a, 91e, 91c, and 91g made of the shape memory polymer, they deform into members 91b, 91f, 91d, and 91h respectively in which the fastening function display portions have disappeared substantially. Female fastening members 92a, 92e, 92c, and 92g to be fastened to the fasteners 91a, 91e, 91c, and 91g do not deform substantially after heating. Members 92b, 92f, 92d, and 92h obtained after heating have the substantially same state as that before heating.

Fig. 15 shows constructions corresponding to the above-described condition B. Fig. 15 shows two kinds of constructions of the female part (female fastener) to which the fastener of the present invention is applied and the operation to be performed after the fastener is heated. By heating (not less than glass transition temperature Tg) the female fasteners of all examples, they recover configurations before fastening function display portions are formed. By heating fastening members (female fasteners) 92i and 92k made of the shape memory polymer, they deform into members 92j and 92l respectively in which the fastening function display portions have disappeared substantially. Male fastening members 91i and 91k to be fastened to the fastening members 92i and 92k do not deform substantially after heating. Members 91j and 91l obtained after heating have the substantially same state as that before heating.

Fig. 16 shows constructions corresponding to the above-described condition C. Fig. 16 shows the construction of the female part (female fastener) and the male part to which the fastener of the present invention is applied and the operation to be performed after the fastener is heated. By heating (not less than glass transition temperature Tg) the female fastener and the male fastener, they recover configurations before fastening function display portions are formed. By heating the fastening member (female fastener) 92m made of the shape memory polymer, it deforms into a member 92n in which the fastening function display portion has disappeared substantially. Similarly, by heating a male fastening member 91m to be fastened to the fastening member 92n, the male fastening member 91m deforms into a member 91n in which the fastening function display portion has disappeared substantially.

In the fasteners shown in Figs. 14 through 16, the condition of the inner diameter and the outer diameter and the manufacturing method are similar to those of the second example. Although not shown in the drawings, the outer configuration of the fastening function display portion of the male fastener may decrease, and the inner diameter of the fastening function display portion of the female fastener or the inner diameter of a fit-on portion thereof may increase. The increase of the inner diameter of the fit-on portion means that the inner diameter of the mating pipe-shaped female part increases as a result of snap-fit shaped in 91e state of a pipe-shaped female part and decomposes. In Figs. 14 through 16, only a sectional construction is shown for the sake of simplicity, and an object to be fastened is not shown as in the case of the fastener shown in Fig. 7.

The present invention provides a fastener composed partly or entirely of a polyurethane shape memory polymer, wherein the polyurethane shape memory polymer has a fastening function display portion formed by plastic processing; and the fastening function display portion loses a fastening function by being heated above a glass transition temperature of the polyurethane shape memory polymer. This fastener is made of the polyurethane shape memory polymer in the vicinity of the fastening function-formed portion and has the fastening function display portion formed by the plastic processing. The fastening function display portion loses its fastening function when it is heated above a predetermined temperature. The fastening function display portion and the disappearance of the fastening function are as described above.

The fastener may be entirely made of the polyurethane shape memory polymer or in only the vicinity of the fastening function display portion. Examples of the fastener are as described above.

As described above, one example of the fastener is a male fastener (for example, bolt), and the fastening function display portion loses a fastening function by being heated above the glass transition temperature of the polyurethane shape memory polymer and decreases a diameter thereof. Therefore when the male fastener is fastened to the female fastener (for example, nut) by screwing them each other, a screwed state is released and the male fastener decreases its diameter. Thereby the male fastener separates from the female fastener easily.

As described above, one example of the fastener is a female fastener (for example, nut), and the fastening function display portion loses a fastening function by being heated above the glass transition temperature of the polyurethane shape memory polymer and increases a diameter thereof. Therefore when the female fastener is fastened to the male fastener (for example, bolt) by screwing them each other, the screwed state is released and the female fastener increases its diameter. Thereby the female fastener separates from the male fastener easily.

Finally the method of the present invention for decomposing the fastener composed of the shape memory polymer will be described below.

The present invention provides a method of decomposing a fastener, composed of a shape memory polymer, which has at least one configuration displaying a fastening function selected from a group consisting of a convex portion, a concave portion, a convex/concave portion, a screw portion, and an inclined portion, wherein said portions displaying said fastening function is softened by heating said portions above a glass transition temperature Tg to decompose said fastener in a state where a separation load of said fastener is reduced.

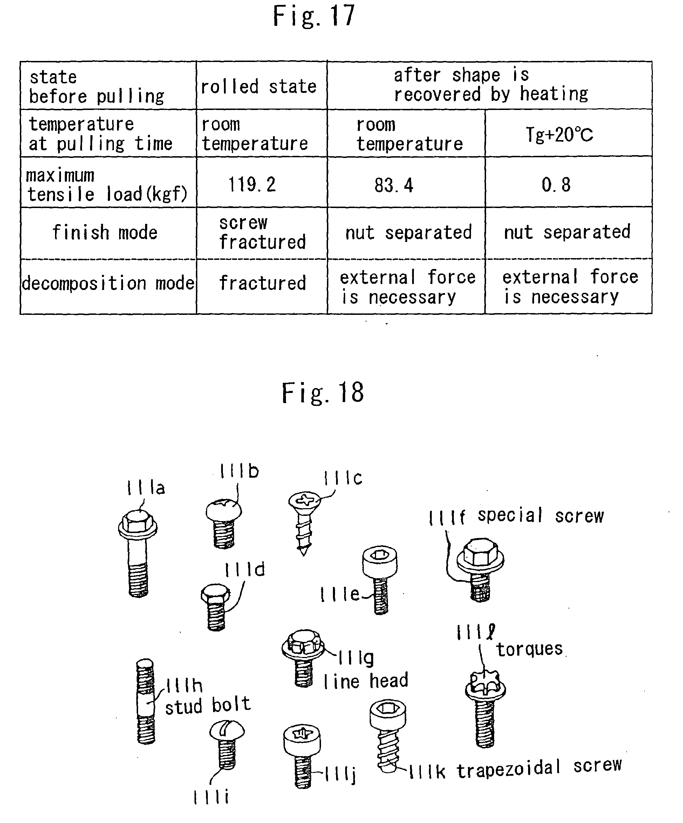

This invention provides a method of heating the fastener composed of the shape memory polymer above the glass transition temperature Tg to soften the fastener and decreasing a separation load to facilitate the decomposition. Fig. 17 shows an example of the method. The male screw part is composed of the shape memory polymer. The female screw part is composed of metal. The specification of the fastener is similar to Fig. 8 of the second example except that the inner diameter of the nut part is set smaller than the outer diameter of the male screw before rolling is carried out by 0.1mm. At this time, the outer configuration of the male screw portion before the secondary shaping is performed is larger than the inner diameter of the female screw portion. Thus when the fastener is heated above the glass transition temperature Tg, the gravity does not cause an automatic decomposition to occur. However, because the male screw portion softens rapidly, it is possible to decompose it with a slight external force at a temperature not less than the glass transition temperature Tg. The maximum tensile load in a rolled state was 119.2 kgf, whereas when the male screw portion was pulled while the fastener was being heated at the glass transition temperature Tg + 20°C, it could be decomposed with a force as small as 0.8 kgf. Therefore when supposition of application of a slight external force is allowed, it is unnecessary to recover its original configuration completely by heating it, and the male screw portion may have a primarily shaped configuration without carrying out secondary shaping. Further the fastening function display portion may be formed by cutting processing. According to this decomposing method, it is possible decompose fasteners having various constructions at a time with a slight external force without restriction being imposed on the configuration thereof.

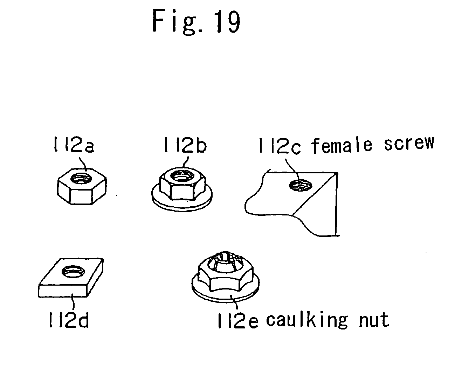

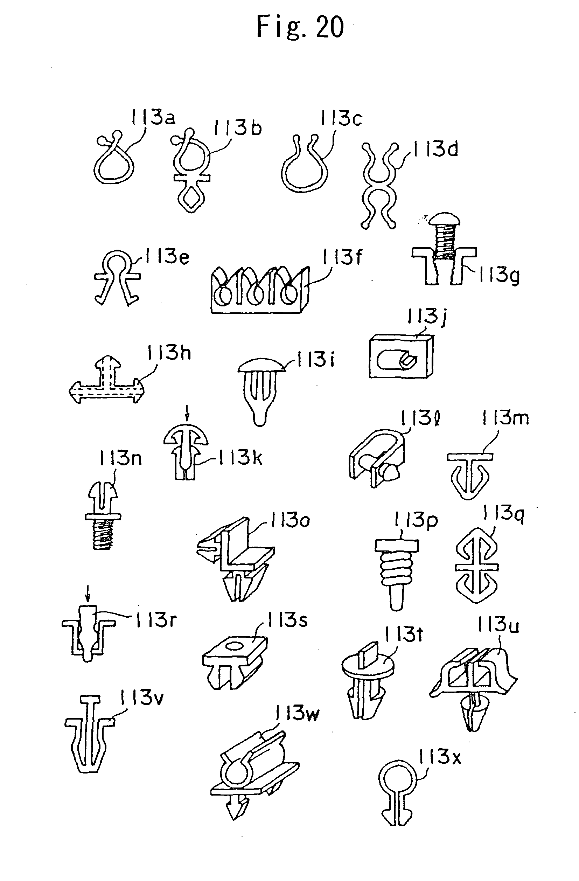

Figs. 18, 19, and 20 show the construction of a plastic fastener which is decomposed by the decomposing method of the present invention. Members 111a, 111b, 111c, 111d, 111e, 111f (special screw), 111g (line head), 111h (stud bolt), 111i, 111j, 111k (trapezoidal screw), and 1111 (torques) shown in Fig.18 are examples of male fasteners. Members 112a, 112b, 112c (female screw), 112d, 112e (caulking nut) shown in Fig. 19 are examples of female fasteners. Members 113a, 113b, 113c, 113d, 113e, 113f, 113g, 113h, 113i, 113j, 113k, 1131, 113m, 113n, 113o, 113p, 113q, 113r, 113s, 113t, 113u, 113v, 113w, and 113x shown in Fig.20 are examples of fasteners.

In the nature of the above-described decomposing method, the fasteners of the second and third examples can be decomposed thereby. In the above-described decomposing method, because restrictions such as necessity of the secondary shaping and the shape recovery characteristic can be lessened, it is possible that the fastener is not composed of the polyurethane shape memory polymer.

According to the examples of the present invention, by designating the plastic processing condition reflecting the material characteristic of the polyurethane shape memory polymer, it is possible to accomplish the secondary shaping by using the cold plastic processing which is conventionally difficult to carry out.

According to the present invention, by using the polyurethane shape memory polymer, it is possible to realize the fastener which can be easily decomposed by heating the polyurethane shape memory polymer. By forming a basic construction of the fastener by using the above-described processing method, it is possible to realize the fastener in which by heating the fastener, the fastening function display portion recovers its original configuration and which loses its fastening force.

According to the examples of the present invention, in the fastener composed of the female part and the male part, by adjusting the relationship between the inner diameter of the female part and the outer diameter of the male part, it is possible to realize the fastening construction which displays the fastening function at the room temperature and loses a fastening force by heating the fastener.

According to the present invention, even when the configuration recovery by heating the fastener is incomplete, the fastener can be easily decomposed by carrying out the decomposing method of softening the fastener by heating it.

As described above, according to the examples of the present invention, by selecting the polyurethane shape memory polymer having an excellent characteristic and by accomplishing the cold plastic processing in addition to the hot molding/cold fixing method as the method of secondarily shaping the shape memory polymer, it is possible to realize the concept of the fastener which can be decomposed by being heated. Further by providing the decomposing method of softening the fastener by heating it, the fastener can be decomposed at a low cost and effectively. Thereby recycling can be accomplished very easily.

APPLICABILITY TO INDUSTRY

According to the present invention, by using the plastic processing method reflecting the material characteristic of the polyurethane shape memory polymer, it is possible to accomplish the cold plastic processing method which is conventionally difficult to carry out. Thereby the polyurethane shape memory polymer can be easily secondarily shaped, and it is possible to manufacture products, made of the shape memory polymer, which are capable of recovering its original configuration when they are heated.

According to the present invention, it is possible to manufacture products and particularly the fastener recovering the original configuration thereof when they are heated. Thereby it is possible to practically use the fastener which has a sufficient fastening force at the room temperature and loses a fastening force above the glass transition temperature Tg.

According to the present invention, even when the configuration recovery is made incompletely by heating the fastener having the decomposing function, the fastener can be easily decomposed by carrying out the decomposing method of softening the fastener by heating it.

By these advantages provided by the present invention, it is possible to easily decompose products which are decomposed by breaking them conventionally. Thus a recycle can be accomplished without damaging the parts. Further it is possible to reduce burden on an operator, improve safety, greatly reduce the time required in decomposition and recycling, and greatly contribute to reduction of cost. Therefore it is possible to accelerate the arrival of a recycle society.

**Claims**

1. A method for plastically processing a polyurethane shape memory polymer, wherein a strain speed not more than 14 sec$^{-1}$ is used.

2. A method for plastically processing a shape memory polymer according to claim 1, wherein said plastically processing includes rolling processing and uses a peripheral speed not more than 3.8×d0cm/second in a rotation of a shaft of a material when supposing that a diameter of said material before said material is processed is d0.

3. A method for plastically processing a shape memory polymer according to claim 1 or 2, wherein in said plastically processing of said polyurethane shape memory polymer, said polyurethane shape memory polymer is cooled below Tg-45°C when supposing that a glass transition temperature of said polyurethane shape memory polymer is Tg.

4. A fastener comprising a shape memory polymer composed of a polyurethane shape memory polymer partly or entirely, wherein said polyurethane shape memory polymer has at least one configuration displaying a fastening function selected from a group consisting of a convex portion, a concave portion, a convex/concave portion, a screw portion, and an inclined portion.

5. A fastener according to claim 4, wherein a portion displaying said fastening function is partly or entirely secondarily shaped by using a processing method according to any one of claims 1 through 3 or a hot molding/cold fixing method.

6. A fastener according to claim 5, wherein said fastener is male fastener and comprises a fastening function display portion composed of a polyurethane shape memory polymer, when supposing that an outer diameter of said fastening function display portion is d1, that an outer diameter thereof before a secondary shaping is carried out is d0, and that an inner diameter of a fastening function display portion of a mating female fastener which fits on said male fastener or a fit-on portion of said female fastener is D1, said fastening function display portion is formed by said processing method according to any one of claims 1 through 3 or said hot molding/cold fixing method so that both equations (1) and (2) shown below are satisfied:

$$d0 < D1 \cdots (1)$$

$$d1 > D1 \cdots (2)$$

7. A fastener according to claim 5, wherein said fastener is a female fastener and comprises a fastening function display portion composed of a polyurethane shape memory polymer, when supposing that an inner diameter of said fastening function display portion is D1, that an inner diameter thereof before a secondary shaping is carried out is D0, and that an outer diameter of a fastening function display portion of a mating male fastener which fits on said female fastener or a fit-on portion of said male fastener is d1, said fastening function display portion is formed by said processing method according to any one of claims 1 through 3 or said hot molding/cold fixing method so that both equations (3) and (4) shown below are satisfied:

$$d1 < D0 \cdots (3)$$

$$d1 > D1 \cdots (4)$$

8. A fastener according to claim 5, wherein said fastener comprises a male fastener and a female fastener, and said male fastener comprising a fastening function display portion composed of a polyurethane shape memory polymer, when supposing that an outer diameter of said fastening function display portion is d1, that an outer diameter thereof before a secondary shaping is carried out is d0, that an inner diameter of a fastening function display portion, composed of a polyurethane shape memory polymer, of a mating female fastener which fits on said male fastener or a fit-on portion, composed of said polyurethane shape memory polymer, of said female fastener, is D1, and that an inner diameter of said female fastener before said secondary shaping is carried out is D0, said fastening function display portion of said male fastener and said fastening function display portion of said female fastener or said fit-on portion thereof are formed by said processing method according to any one of claims 1 through 3 or said hot molding/ cold fixing method so that both equations (5) and (6) shown below are satisfied:

$$d0 < D0 \cdots (5)$$

$$d1 > D1 \cdots (6)$$

9. A method of decomposing a fastener, composed of a shape memory polymer, which has at least one configuration displaying a fastening function selected from a group consisting of a convex portion, a concave portion, a convex/ concave portion, a screw portion, and an inclined portion, wherein said portions displaying said fastening function is softened by heating said portions above a glass transition temperature Tg to decompose said fastener in a state where a separation load of said fastener is reduced.

10. A method of manufacturing a shape memory polymer structure composed partly or entirely of a polyurethane shape memory polymer, comprising:

a step of preparing said shape memory polymer structure composed partly or entirely of said polyurethane shape memory polymer; and
a step of plastically processing a to-be-processed portion composed of said polyurethane shape memory polymer of said shape memory polymer structure at a strain speed not more than 14 sec$^{-1}$.

11. A method of manufacturing a shape memory polymer structure according to claim 10, wherein said step of plastically processing is a rolling processing step, and said rolling processing step uses a peripheral speed not more than 3.8×d0cm/second in a rotation of a shaft of said structure when supposing that a diameter of said structure before said material is processed is d0.

12. A method of manufacturing a shape memory polymer structure according to claim 10 or 11, wherein said step of plastically processing is carried out in a state in which said shape memory polymer is cooled below 45°C from a glass transition temperature thereof.

13. A method of manufacturing a shape memory polymer structure according to any one of claims 10 through 12, wherein said shape memory polymer structure is a fastener having a fastening function display portion formed in said step of plastically processing step.

14. A fastener composed partly or entirely of a polyurethane shape memory polymer, wherein said fastener has a fastening function display portion provided at a portion composed of said polyurethane shape memory polymer and formed by plastic processing; and said fastening function display portion loses a fastening function by being heated above a glass transition temperature of said polyurethane shape memory polymer.

15. A fastener according to claim 14, wherein said fastener is a male fastener; and said fastening function display portion loses a fastening function by being heated above said glass transition temperature of said polyurethane shape memory polymer and decreases a diameter thereof.

16. A fastener according to claim 14, wherein said fastener is a female fastener; and said fastening function display portion loses a fastening function by being heated above said glass transition temperature of said polyurethane shape memory polymer and increases a diameter thereof.

# Fig. 1

T=room temperature          T>Tg

drop/decomposition

# Fig. 2

# Fig. 3

# Fig. 4

# Fig. 5

display of
temperature/control
part

$-40°C$

54

57

55

56

53

52

51B

51A

# Fig. 6

| | rolled state | after shape is recovered by heating |
|---|---|---|
| shape of screw | | |

# Fig. 7

71a → heating → 71b

d₁          d₀

# Fig. 8

72a → heating → 72b

D₁          D₀

# Fig. 9

71c
72c
→ heating →
71d
72d

# Fig. 10

71e
72e
→ heating →
71f
72f

# Fig. 11

71g

72g

heating →

71h

72h

# Fig. 12

| state before pulling | rolled state | after shape is recovered by heating | |
|---|---|---|---|
| temperature at pulling time | room temperature | room temperature | Tg+20°C |
| maximum tensile load (kgf) | 119. 1 | 0 | 0 |
| finish mode | screw fractured | nut dropped during rise of temperature | nut dropped during rise of temperature |
| decomposition mode | fractured | external force is unnecessary | external force is unnecessary |

# Fig. 13

tensile load

tensile load

constant temperature bath
(control of temperature)

image of pulling/decomposition test

# Fig. 14

# Fig. 15

# Fig. 16

## Fig. 17

| state before pulling | rolled state | after shape is recovered by heating | |
|---|---|---|---|
| temperature at pulling time | room temperature | room temperature | Tg+20°C |
| maximum tensile load(kgf) | 119.2 | 83.4 | 0.8 |
| finish mode | screw fractured | nut separated | nut separated |
| decomposition mode | fractured | external force is necessary | external force is necessary |

## Fig. 18

# Fig. 19

112a 112b 112c female screw

112d 112e caulking nut

# Fig. 20

113a 113b 113c 113d

113e 113f 113g

113h 113i 113j

113n 113k 113l 113m

113o 113p 113q

113r 113s 113t 113u

113v 113w 113x

### INTERNATIONAL SEARCH REPORT

| International application No. |
|---|
| PCT/JP03/05723 |

**A. CLASSIFICATION OF SUBJECT MATTER**
Int.Cl$^7$ B29C61/06, F16B19/00, F16B35/00, F16B37/00

According to International Patent Classification (IPC) or to both national classification and IPC

**B. FIELDS SEARCHED**

Minimum documentation searched (classification system followed by classification symbols)
Int.Cl$^7$ B21H3/00-3/12, B29C61/00-61/10, B29D1/00, F16B1/00-1/04,
F16B4/00, F16B23/00-43/02

Documentation searched other than minimum documentation to the extent that such documents are included in the fields searched
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 01/46597 A1 (BRUNEL UNIVERSITY),<br>28 June, 2001 (28.06.01),<br>Column 6, lines 23 to 26; column 10, lines 6 to 16;<br>column 11, lines 6 to 17; Figs. 4, 6<br>& EP 1244876 A1 & JP 2003-518230 A | 4-9,14-16<br>1-3,10-13 |
| X<br>A | WO 98/26187 A1 (BRUNEL UNIVERSITY),<br>18 June, 1998 (18.06.98),<br>Column 8, lines 11 to 12; column 21, lines 17 to<br>23; Fig. 22<br>& EP 941410 A1 & JP 2001-50106 A | 4-9,14-16<br>1-3,10-13 |
| E,X | JP 2003-145564 A (Mitsubishi Heavy Industries,<br>Ltd., MEIRA CORP.),<br>20 May, 2003 (20.05.03),<br>Full text; Figs. 1 to 12<br>(Family: none) | 1-16 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>12 August, 2003 (12.08.03) | Date of mailing of the international search report<br>02 September, 2003 (02.09.03) |
|---|---|

| Name and mailing address of the ISA/<br>Japanese Patent Office | Authorized officer |
|---|---|
| Facsimile No. | Telephone No. |

Form PCT/ISA/210 (second sheet) (July 1998)

## INTERNATIONAL SEARCH REPORT

| | International application No. |
|---|---|
| | PCT/JP03/05723 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 7-4407 A  (Sony Corp.),<br>10 January, 1995 (10.01.95),<br>Full text; Figs. 1 to 18<br>(Family: none) | 1-16 |
| A | JP 2002-196150 A  (Ichiro YANAKA, Masaki KATAOKA),<br>10 July, 2002 (10.07.02),<br>Par. Nos. [0023], [0031]; Figs. 1 to 2<br>(Family: none) | 1-16 |

Form PCT/ISA/210 (continuation of second sheet) (July 1998)

## INTERNATIONAL SEARCH REPORT

International application No.

PCT/JP03/05723

| Box I | Observations where certain claims were found unsearchable (Continuation of item 2 of first sheet) |

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box II | Observations where unity of invention is lacking (Continuation of item 3 of first sheet) |

This International Searching Authority found multiple inventions in this international application, as follows:

The inventions of claims 1-3, 10-13 relate to plastic forming including roll forming of a polyurethane shape-memory polymer.

The inventions of claims 4-8, 14-16 relate to use of a polyurethane shape-memory polymer for a fastener.

The invention of claim 9 relates to a method of decomposing a fastener using a shape-memory polymer.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐   The additional search fees were accompanied by the applicant's protest.

☐   No protest accompanied the payment of additional search fees.

Form PCT/ISA/210 (continuation of first sheet (1)) (July 1998)